# EUROPEAN PATENT APPLICATION

(11) **EP 2 555 313 A2**
(43) Date of publication of application: **06.02.2013**
(21) Application number: 12164156.7
(22) Date of filing: 13.04.2012
(51) Int. Cl.: H01M 10/50

(54) **Storage battery device**

(30) Priority: 05.08.2011 JP 2011172385
(71) Applicant: Kabushiki Kaisha Toshiba, Minato-ku, Tokyo 105-8001 (JP)
(72) Inventor: Kosugi, Shinichiro, TOKYO, Tokyo 105-8001 (JP); Kuroda, Kazuto, TOKYO, Tokyo 105-8001 (JP)
(74) Representative: Fritsche, Daniel

(57) **Abstract**

According to one embodiment, an AC blocking filter (12) is provided between charging/discharging terminals of a storage battery (11) and an inverter (20) that converts a DC output of the storage battery to an AC output. Further, a DC blocking filter (13) is connected to the charging/discharging terminals. An alternating current generation device supplies a warm-up alternating current to the storage battery (11) via the DC blocking filter (13).

## Description

### FIELD

Embodiments described herein relate generally to a storage battery device having a warm-up function.

### BACKGROUND

Recently, much attention is paid to cars such as electric cars or hybrid cars mainly having storage batteries as power drive sources. A phenomenon that the series equivalent resistance significantly increases in a low-temperature atmosphere below freezing point is observed in most of chemical batteries such as lithium ion batteries or nickel-hydrogen batteries. These batteries are widely used as storage batteries mounted on the electric cars and the output power thereof is extremely reduced in comparison with the normal temperature time.

The car is required to start easily even in a low-temperature atmosphere in which the ambient temperature is approximately -30°C. Therefore, it is required to take some remedies for storage batteries having characteristics in which the output power is reduced in the low-temperature atmosphere.

A method for warming the storage battery is proposed as a method for compensating for a reduction in the output power of the storage battery in the low-temperature atmosphere. For example, the following methods are proposed as the method for warming the storage battery.
(1) The use prediction time of an electric vehicle having a storage battery mounted thereon is managed by use of a timer. Then, the storage battery is charged and warmed before the electric vehicle is used. (2) The temperature of the storage battery is detected and the storage battery is discharged and warmed when the temperature thereof is reduced. (3) A to-be-warmed part is a capacitor and it is warmed from the exterior by means of a heater.

With a method for warming the battery from the exterior by means of a heater, it takes a long time until the battery is warmed depending on the efficiency of heat conduction to the battery and the rate of a temperature rise. On the other hand, with the conventional method for warming the battery from inside, a sufficiently large charging/discharging current that increases the temperature cannot be passed therethrough from the viewpoint of protection depending on the state of charge (fully charged or almost completely discharged) of the battery. Further, there occurs a problem that the battery life is reduced if the battery is rapidly charged or discharged with such a large current as to warm the battery.

### BRIEF DESCRIPTION OF THE DRAWINGS

FIG. 1 is a diagram showing a typical example of the configuration of one embodiment.
FIG. 2 is a diagram showing a typical example of the configuration of another embodiment.
FIG. 3 is a diagram showing a typical example of the configuration of still another embodiment.
FIG. 4 is a frequency characteristic diagram showing a resonance point appearing when an alternating current is supplied to a storage battery.
FIG. 5 is a diagram showing the principle of the internal configuration of a generator 42, switch 45 and multiphase/two-phase converter 46 shown in FIG. 2.
FIG. 6 is a diagram showing the principle of the internal configuration of a warming inverter 48 shown in FIG. 3.
FIG. 7 is a diagram showing an example in which a current amount adjuster is provided in a passage via which an alternating current for warming is supplied to the storage battery.

### DETAILED DESCRIPTION

In general, according to one embodiment, there is provided a storage battery device which passes a current without causing charging/discharging on average through a battery by supplying an alternating current to the battery at the low-temperature time, heats the battery from inside to warm the battery and stabilizes the output characteristic of the battery.

According to an embodiment of the present disclosure, the storage battery device includes a storage battery, an alternating current generation device, and a DC blocking filter. The storage battery includes an internal resistor that converts power energy passed therethrough to thermal energy. The alternating current generation device includes an alternating current generation device that supplies an alternating current to the storage battery and the DC blocking filter blocks a direct current output to the alternating current generation device from the storage battery.

An embodiment will further be described with reference to the drawings.

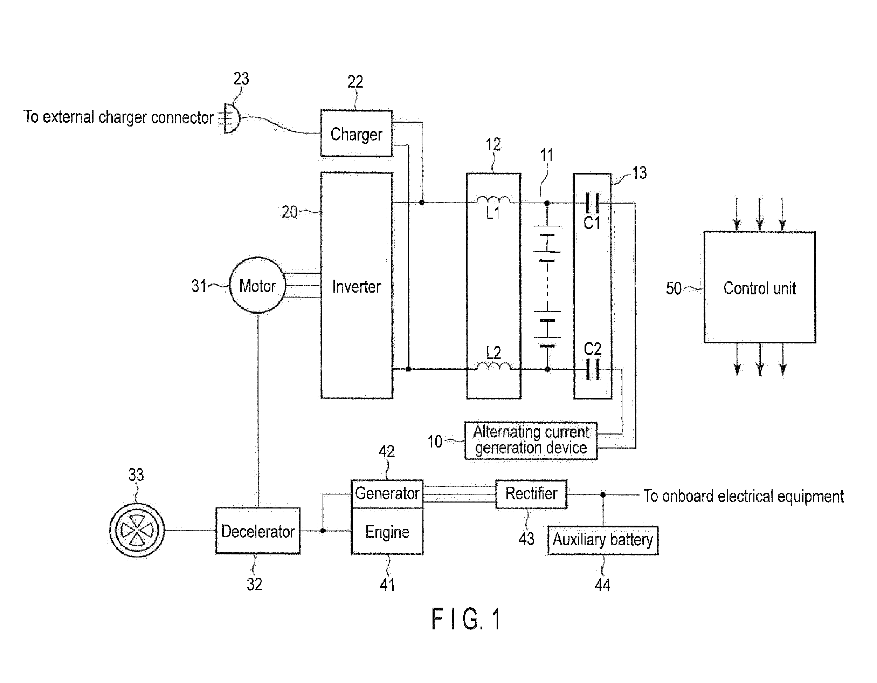

FIG. 1 is a block diagram showing the simplified configuration of a hybrid car using two driving sources of a motor and engine. An example in which this embodiment is applied to the hybrid car is explained, but this application example does not limit the scope of this invention.

In FIG. 1, a plurality of cells are connected in series as a storage battery 11. In this embodiment, the storage battery is represented as one battery having the cells provided therein.

The storage battery 11 is connected to the positive and negative terminals of an inverter 20 via coils L1, L2 that block an alternating current (and/or an AC voltage).

An AC blocking filter 12 includes coils L1, L2. A circuit between the positive and negative terminals of the storage battery 11 and the positive and negative terminals of the inverter 20 may be referred to as a main wiring circuit in some cases. The blocking effect of the AC blocking filter 12 becomes more significant as the frequency of an alternating current supplied from an alternating current generation device 10 becomes higher. Therefore, if a low frequency is used, the AC blocking filter 12 may sometimes not be used.

The positive and negative output terminals of a charger 22 may be connected to the positive and negative terminals of the storage battery 11 via coils L1, L2. A plug 23 used for drawing power from the exterior at the time of charging to the storage battery 11 is provided in the charger 22. A car having the above function is called a plug-in hybrid car and is a vehicle having a mechanism capable of charging the storage battery 11 from the exterior of the car.

Further, the AC output terminals of the alternating current generation device 10 are connected to the positive and negative terminals of the storage battery 11 via capacitors C1, C2.

A DC blocking filter 13 includes capacitors C1, C2.

A control unit 50 is a control device that controls an inverter, storage battery, engine and the like. It acquires temperature information of a battery from a battery-monitoring unit of the storage battery 11. When the temperature of the storage battery 11 becomes lower than a preset temperature previously set, the control unit 50 turns on the alternating current generation device 10. Then, the alternating current generation device 10 supplies an alternating current to the storage battery 11. Since a DC output of the storage battery 11 is blocked by means of the DC blocking filter 13, a reverse current to the alternating current generation device 10 is prevented. Further, since an alternating current from the alternating current generation device 10 is blocked by means of the AC blocking filter 12, input to the inverter 20 is prevented.

As a result, the battery is heated by an alternating current flowing through the internal resistor of the battery and the temperature of the storage battery 11 rises.

Since the AC blocking filter 12 is provided on the inverter 20 side, an alternating current supplied from the alternating current generation device 10 is suppressed from flowing into the input capacitor of the inverter 20 and the storage battery 11 can be efficiently warmed.

Since charging/discharging is not performed on average by supplying an alternating current to the storage battery 11, the state of charge (SOC) of the battery is kept unchanged. Further, if the frequency range used is adequately selected, a large alternating current can be supplied while suppressing deterioration of the storage battery 11 and the storage battery 11 can rapidly and efficiently be warmed. As the frequency range, a frequency near the resonance frequency of the storage battery 11 may be selected, for example.

When the warming process is completed, the control unit 50 interrupts output of the alternating current generation device 10 and interrupts supply of an alternating current to the storage battery 11.

The inverter 20 converts a DC voltage from the storage battery 11 to a three-phase alternating current and supplies the same to a motor 31. The rotation power of the motor 31 is transmitted to a wheel 33 via a decelerator 32. At this time, that is, when the decelerated rotation power of the motor 31 is transmitted to the wheel 33, the rotation power is added to the rotation power of an engine 41 using oil or natural gas as an energy source and then transmitted to the wheel 33.

The rotation of a shaft of the engine 41 is transmitted to a generator (that may be called an alternator) 42. A three-phase alternating current generated from the generator 42 is rectified by means of a rectifier 43 and then charged to an auxiliary battery 44 (for example, 12 V). The auxiliary battery 44 is used as a power source of onboard electrical equipment such as operating power sources for onboard lights, car navigator, ignition of an engine, cooling device and the like, a power source of the control unit 50 and the like.

In the above car, motion energy of the car obtained from the wheel 33 can be regenerated to the storage battery 11 by using the motor 31 as a generator based on the control of the control unit 50. Further, the storage battery 11 may be charged by means of the engine 41 by driving the motor 31 as a generator. The motor 31 is used not only as the electric motor but also as the generator, but the electric motor and generator can be separately mounted.

The alternating current generation device 10 can variously be formed in embodiments and is explained below.

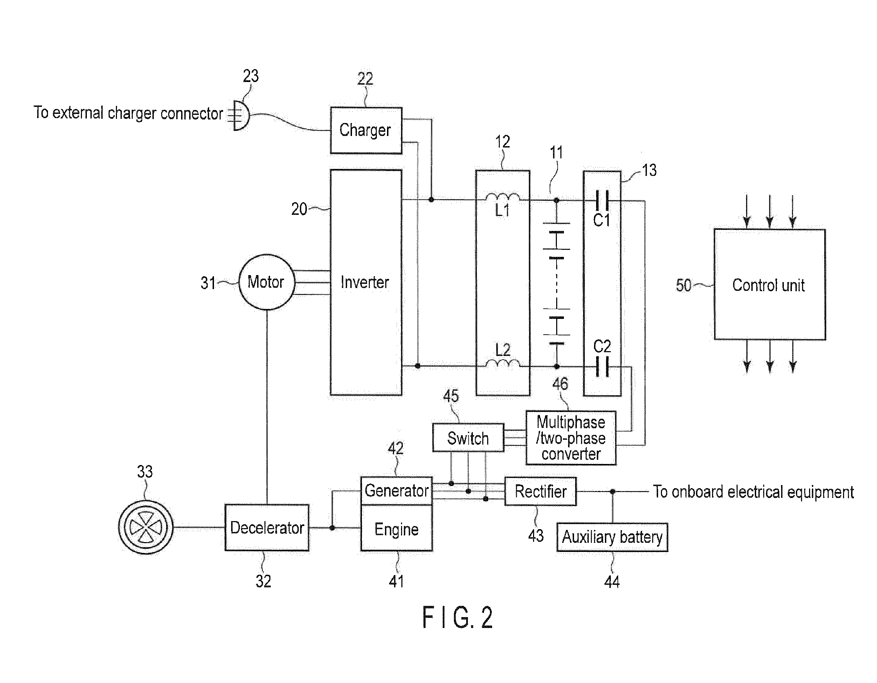

FIG. 2 shows another embodiment. In FIG. 2, the same portions as those of FIG. 1 are denoted by the same symbols as those of FIG. 1 and the repetitive explanation is omitted. In the case of the embodiment of FIG. 2, the AC output terminals of a multiphase/two-phase converter 46 (for example, a Scott transformer) are connected to the positive and negative terminals of a storage battery 11 via capacitors C1, C2. Capacitors C1, C2 configure a DC blocking filter 13.

A three-phase alternating current generated form a generator 42 is further coupled to the multiphase/two-phase converter 46 via a switch 45. The switch 45 is on/off-controlled by means of a control unit 50. The control unit 50 receives temperature information of a battery from a battery-monitoring unit of the storage battery 11. When the temperature of the storage battery 11 becomes lower than a preset temperature, the control unit 50 turns on the switch 45. Then, the multiphase/two-phase converter 46 converts a three-phase output of the generator 42 to a two-phase alternating current and supplies the same to the storage battery 11. Since the DC output of the storage battery 11 is blocked by means of the DC blocking filter 13, a reverse current will not be supplied to the multiphase/two-phase converter 46. Further, since the alternating current from the multiphase/two-phase converter 46 is blocked by means of an AC blocking filter 12, the current will not be input to the inverter 20.

As a result, the battery is heated by an alternating current flowing through the internal resistor of the battery and the storage battery 11 is warmed. When the warming process is completed, the control unit 50 opens the switch 45 to interrupt supply of the alternating current to the storage battery 11.

The rotation speed of the engine 41 can be controlled to be set in a target frequency range based on the control unit 50 while the alternating current is being supplied to the storage battery 11. Further, a fuel supply amount to the engine 41 can be adjusted based on the control of the control unit 50 to compensate for a load variation of the engine 41 caused by a load variation of the generator 42 that varies according to the on/off state of the switch 45.

In FIG. 2, the generator 42 is directly coupled with the output shaft of the engine 41, but may be connected thereto via a decelerator or another power transmission means. Generally, if the generators supply the same power, the loss of one of the generators tends to become smaller as an output voltage thereof becomes higher. Therefore, it is preferable to adjust the turn ratio of the transformer and set a high-voltage small current on the primary side (generator 42 side) and a low-voltage large current on the secondary side (storage battery side) at the multiphase/two-phase conversion time instead of acquiring a low-voltage large current required for warming the storage battery 11 directly from the generator 42. If the generator 42 is of a two-phase output type, the multiphase/two-phase conversion becomes unnecessary.

Although not necessarily limited to this case, the storage battery 11 includes 100 cells, for example, and the output voltage thereof is selected in a range of 200 to 400 V, for example. Further, the present system may be designed to make it possible to select the power (current and voltage) of a high-frequency alternating current used for warming the battery based on the scale of the storage battery 11 and various conditions.

For example, the difference (A2-A1) between present temperature A1 of the battery and target high temperature A2 and time T required for reaching temperature A2 may be previously actually measured and measurement data may be stored in a memory as a table. Then, the present system may be designed to make it possible to freely select a combination of a current of 1, 5 and 10 A and a voltage of 1, 10 and 20 V, for example, as an alternating current as required time T becomes shorter. Since the temperature-rise characteristics at the warming time are different according to the protection cover and arrangement state of the storage battery 11 and the output standard of the storage battery 11, a plurality of tables of the measurement data may be formed for the respective storage batteries.

Adjustment means capable of adjusting the period and time in which the warming operation for the storage battery 11 is performed according to the use environment of a car (for example, a case wherein an emergency start is required as in an ambulance or a case of parking for a long time) may be provided between the control unit and operating unit.

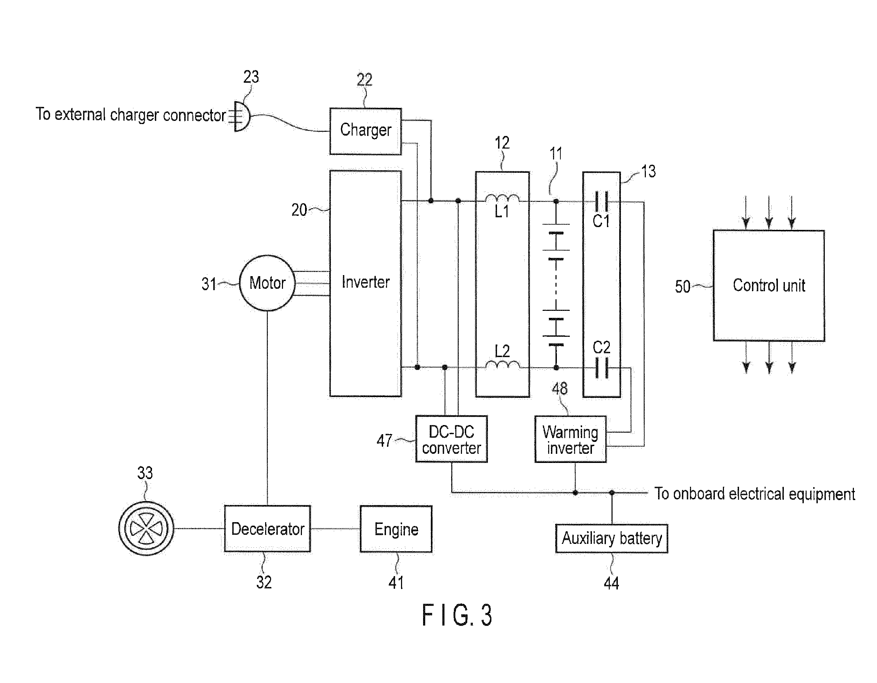

FIG. 3 shows still another embodiment. The above embodiment shows a case wherein the generator 42 is provided on the engine 41 and an AC output of the generator 42 is converted to a high-frequency alternating current to be supplied to the storage battery 11.

However, in some hybrid cars, a generator is not provided on the engine 41. Further, an electric car in which the engine 41 is not mounted and only the motor 31 is used as a driving source is present. FIG. 3 shows one example of a storage battery device that can be applied to a car of this type. In FIG. 3, the same portions as those of FIG. 2 are denoted by the same symbols as those of FIG. 2 and the repetitive explanation thereof is omitted. As shown in FIG. 3, the positive and negative input terminals of a DC-DC converter 47 are connected to the positive and negative terminals of a storage battery 11 via an AC blocking filter 12. An output voltage of 12 V, for example, converted by the DC-DC converter 47 is supplied to an auxiliary battery 44.

The output terminal of the auxiliary battery 44 is connected to the input terminal of a warming inverter 48. The output terminal of the warming inverter 48 is connected to the storage battery 11 via a DC blocking filter 13.

The warming inverter 48 is an inverter controlled by a control unit 50. When determining that the storage battery 11 is to be warmed, the control unit 50 drives the warming inverter 48. The warming inverter 48 performs DC-AC conversion to output an alternating current and supplies the alternating current to the storage battery 11. As a result, the storage battery 11 is heated and warmed. The warming inverter 48 includes a semiconductor switch element (field-effect transistor [FET], insulated-gate bipolar transistor [TGBT] or the like) for a switching operation.

In the above embodiment, power of the auxiliary battery 44 is converted to an alternating current by means of the warming inverter 48. However, this embodiment is not limited to this case and power can be directly obtained from the storage battery 11.

In this case, it is suitable to draw power that is voltage-reduced by means of a transformer from between the AC blocking filter 12 and an inverter 20. The transformer may be included in the warming inverter 48. With this configuration, energy obtained from the storage battery 11 as a drive current of the warming inverter 48 is supplied to the storage battery 11 as an alternating current. Therefore, in comparison with the former embodiment, the storage battery 11 can be warmed while suppressing the power consumption of the auxiliary battery 44.

Further, power used to generate an alternating current is obtained from the storage battery 11. Therefore, energy consumption in the internal resistor of the storage battery generated by drawing a current from the storage battery 11 is added to energy consumption in the internal resistor of the storage battery generated by supplying an alternating current. As a result, in this embodiment, it becomes possible to acquire approximately two times a heating value attained in a case wherein power is obtained from a portion other than the storage battery and an alternating current of the same amplitude is supplied.

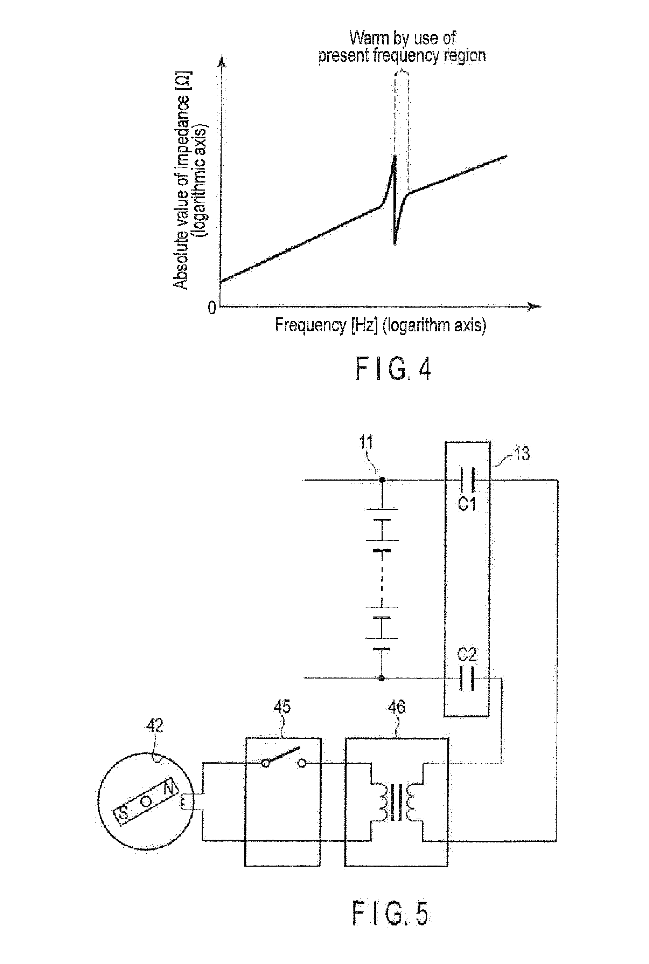

Next, the frequency of an alternating current supplied for warming the storage battery 11 is explained. The storage battery uses metal such as aluminum for the electrodes and the AC impedance between the positive and negative electrodes exhibits an inductive impedance characteristic in a relatively high frequency (approximately 100 kHz or more). For this reason, a resonance point as shown in FIG. 4 exists in the AC impedance between the positive and negative electrodes of the storage battery. In the characteristic diagram of FIG. 4, the abscissa represents a frequency and the ordinate represents the absolute value of AC impedance. When an alternating current is supplied to the storage battery having the above resonance point and if the frequency of the alternating current is selected to a frequency near the resonance point, a large current with a low voltage can be passed through the storage battery 11 and it becomes advantageous in manufacturing the warming inverter.

As described above, a current that does not cause charging/discharging is passed through the battery to heat the battery from the internal portion and warm the battery and the output characteristic at the low-temperature time can be improved by supplying an alternating current to the battery at the low-temperature time.

FIG. 5 shows the principle of the internal configuration of the generator 42, switch 45 and multiphase/two-phase converter 46 shown in FIG. 2. When a rotor of the generator 42 having a permanent magnet is rotated and driven by the engine 41, an induction current flows through a stator having a coil and is output as an alternating current (in this example, a two-phase alternating current). The alternating current is supplied to a multiphase/two-phase converter 46 (in this example, two-phase/two-phase converter) via the switch 45. In this case, the turn ratio of the converter 46 is adequately adjusted to set a high-voltage small current on the primary side (generator 42 side) and a low-voltage large current on the secondary side (storage battery side). At the warming time, the switch 45 is turned on and an output current of the converter 46 is supplied to the storage battery 11 via the DC blocking filter 13.

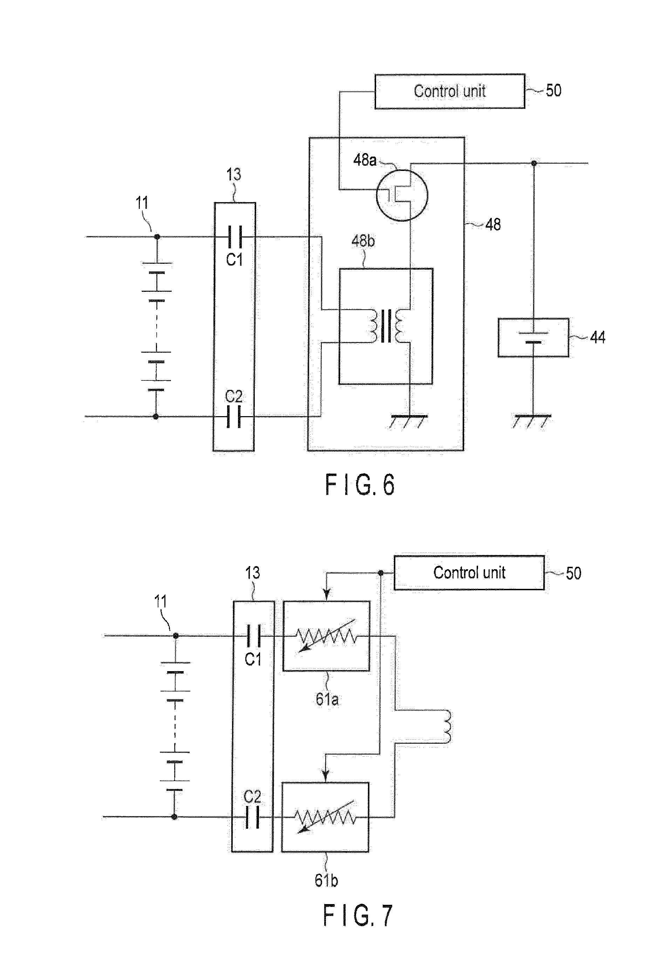

FIG. 6 shows the principle of the internal configuration of the warming inverter 48 shown in FIG. 3. The input electrode of a switching transistor 48a is connected to the positive electrode of the auxiliary battery 44 and the output electrode of the switching transistor 48a is connected to an earth line via the primary winding of a transformer 48b. The secondary winding of the transformer 48b is connected to the storage battery 11 via the DC blocking filter 13. An on/off control signal of the switching transistor 48a is obtained from the control unit 50.

FIG. 7 shows an example in which current amount adjusters 61a, 61b are provided in a passage through which an alternating current for warming is supplied to the storage battery 11. The current amount adjusters 61a, 61b are controlled by the control unit 50. For example, after supply of an alternating current to the storage battery 11 is started, the current amount may be varied according to a variation in the battery temperature. That is, when supply of an alternating current is started, the battery temperature starts to rise, but at this time, since the reaction is slow if the battery temperature is low, a large current amount is set in the initial stage and the current amount is reduced after the battery temperature reaches a preset temperature. In the case of the circuit configuration of FIG. 6, the current amount can be varied with time by subjecting an on/off control signal of the switching transistor 48a to pulse width modulation and supplying the thus obtained signal.

The above embodiment can be applied to not only the driving sources of the electric car, hybrid car but also the driving source of an electric vehicle using a storage battery as a driving power source, for example, a forklift or two-wheeled vehicle. Further, the embodiment is not limited to the electric vehicle but can be applied to an outdoor storage battery, power supply plant or the like.

The embodiments of this invention are explained above, but these embodiments are presented as an example, and they are not intended to limit the scope of this invention. The novel embodiments can be embodied in other various forms and various omissions, substitutions and changes can be made without departing from the spirit of this invention. For example, the number of cells configuring the storage battery,11 may be set to one or a plurality of cells may be connected in series or in parallel. The embodiments and modifications are included in the scope and spirit of the invention and are included in the scope of the inventions described in claims and the range equivalent thereto.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A storage battery device **characterized by** comprising:
a storage battery (11) configured to include an internal resistor that converts power energy passed therethrough to thermal energy,
an alternating current generation device (10) configured to supply an alternating current to the storage battery, and
a DC blocking filter (13) configured to block a direct current output to the alternating current generation device from the storage battery.

2. The storage battery device according to claim 1, **characterized by** further comprising:
an inverter (20) configured to convert a direct current output from the storage battery (11) to an alternating current, and
an AC blocking filter (12) configured to block an alternating current output from the alternating current generation device (10) to the inverter (20) via the storage battery (11).

3. The storage battery device according to claim 1, **characterized in that** the alternating current generation device is a converter (46) that converts an output from a generator driven (42) by an engine to the alternating current.

4. The storage battery device according to claim 1, **characterized in that** the alternating current generation device is a second inverter (48) that converts a direct current from an auxiliary battery (44) to the alternating current.

5. The storage battery device according to claim 4, **characterized in that** the second inverter (48) converts an output voltage from a DC-DC converter (47) that converts a DC output generated in the AC blocking filter to the alternating current.

6. The battery device according to claim 4, **characterized in that** the second inverter (48) converts an output of the AC blocking filter (12) directly to the alternating current.

7. The storage battery device according to claim 1, **characterized by** further comprising:
a current amount adjuster (61a, 61b) configured to adjust a current amount between the DC blocking filter and the alternating current generation device.

8. The storage battery device according to any one of claims 1 to 7, **characterized in that** an output of the inverter is supplied as power to a motor (31).
